# EUROPÄISCHE PATENTSCHRIFT

(11) **EP 4 071 008 B1**
(45) Veröffentlichungstag und Bekanntmachung des Hinweises auf die Patenterteilung: **20.12.2023**
(21) Anmeldenummer: 22152296.4
(22) Anmeldetag: 19.01.2022
(51) Int. Cl.: B60T 1/00, B60T 7/10, F16D 63/00, F16D 127/06

(54) **SPERRAKTOR, VERFAHREN ZUM BETREIBEN EINES SPERRAKTORS, GETRIEBE MIT EINEM SOLCHEN SPERRAKTOR UND BETRIEBS- UND/ODER PARKBREMSE**
LOCKING ACTUATOR, METHOD FOR OPERATING A LOCKING ACTUATOR, TRANSMISSION WITH SUCH A LOCKING ACTUATOR AND OPERATING AND / OR PARKING BRAKE
ACTIONNEUR DE BLOCAGE, PROCÉDÉ DE FONCTIONNEMENT D'UN ACTIONNEUR DE BLOCAGE, TRANSMISSION DOTÉE D'UN TEL ACTIONNEUR DE BLOCAGE ET FREIN DE FONCTIONNEMENT ET/OU DE STATIONNEMENT

(30) Priorität: 09.04.2021 EP 21167642
(43) Veröffentlichungstag der Anmeldung: 12.10.2022
(73) Patentinhaber: IMS Gear SE & Co. KGaA, 78166 Donaueschingen (DE)
(72) Erfinder: Gruler, Fabian, 78554 Aixheim (DE); Synovzik, Wilfried, 78183 Hüfingen (DE)
(74) Vertreter: Westphal, Mussgnug & Partner Patentanwälte mbB

(56) Entgegenhaltungen:
- EP-A1- 3 333 463
- WO-A1-2016/174587
- DE-A1-102017 127 211
- DE-A1-102017 127 212
- DE-A1-102017 127 214
- US-A- 5 893 439
- US-A1- 2019 277 401

## Beschreibung

Die vorliegende Erfindung betrifft einen Sperraktor, ein Verfahren zum Betreiben eines Sperraktors, ein Bremsengetriebe mit einem solchen Sperraktor und eine Betriebs- und/oder Parkbremse.

Sperraktoren sind aus dem Stand der Technik in unterschiedlichen Ausgestaltungen vorbekannt. Im Stand der Technik dienen Sperraktoren verbreitet der mechanischen Verriegelung von Wellen oder Getriebeteilen und kommen vielseitig zur Anwendung. Gattungsgemäße Sperraktoren werden beispielsweise für elektronische Parkbremsen verwendet und kommen dort zum Einsatz, wenn ein Fahrzeug abgestellt werden soll, oder ein Fahrzeug gegen ein ungewünschtes Wegrollen gesichert werden soll.

Derartige Parkbremsen sind auch als elektrische Parkbremsen (EPB) bekannt und umfassen typischerweise einen Bremssattel und einen Motor, wobei der Motor zum Anziehen der Bremse betätigt wird. Elektrische Parkbremsen kommen in Kraftfahrzeugen verbreitet zusammen mit herkömmlichen hydraulischen Betriebsbremsen in einem Bremssystem zur Anwendung.

Um sicherzustellen, dass die Parkbremsen zu jeder Zeit das Kraftfahrzeug ausreichend bremsen, müssen insbesondere trockene Parkbremsen im stehenden Zustand des Fahrzeugs nachgezogen werden können, um auch im abgekühlten Zustand der beteiligten Bauteile eine ausreichend hohe Bremskraft zur Verfügung zu stellen, damit das Kraftfahrzeug an seiner Position verbleibt.

Weiteren Stand der Technik bilden die US 2019 277 401 A1 und die WO 2016 174 587 A1.

Derartige Bremssysteme haben sich in der Vergangenheit bewährt, allerdings hat es sich gezeigt, dass die verwendeten Sperraktoren hohe Reaktionszeiten aufweisen, wodurch insbesondere das Öffnen der Parkbremse zum Fortsetzen der Fahrt verzögert erfolgt. Oftmals kommen solche Bremssysteme in Verbindung mit Anfahrassistenten oder Berganfahrassistenten zum Einsatz, wobei erst beim Anfahren gegen eine Steigung das Bremssystem eine ungewünschte Rückwärtsbewegung unterbindet.

Darüber hinaus besteht der Wunsch seitens der Automobilindustrie "trockene" elektrische Betriebsbremsen bei Kraftfahrzeugen zu verwenden, um einerseits Gewichtsersparnisse zu erreichen und um andererseits die Komplexität der Bremssysteme zu reduzieren.

Hier setzt die vorliegende Erfindung an.

Die vorliegende Erfindung widmet sich der Aufgabe, einen Sperraktor, insbesondere einen Sperraktor für ein Getriebe, beispielsweise einer elektrischen Betriebsbremse, bereitzustellen, der in zweckmäßiger Weise die aus dem Stand der Technik bekannten Nachteile beseitigt. Der Sperraktor soll ein besonders schnelles Schaltverhalten aufweisen, zuverlässig und mechanisch robust sein und eine kompakte Bauweise aufweisen, um den begrenzt verfügbaren Bauraum bestmöglich auszunutzen. Ferner soll ein Verfahren zum Betreiben eines solchen Aktors, ein Getriebe, insbesondere ein Bremsengetriebe, und eine Betriebsbremse eines Kraftfahrzeugs vorgeschlagen werden.

Diese Aufgaben werden durch einen Sperraktor mit den Merkmalen des Patentanspruchs 1, ein Verfahren zum Betreiben eines Sperraktors mit den Merkmalen des Patentanspruchs 14, ein Getriebe, insbesondere ein Bremsengetriebe, mit den Merkmalen des Patentanspruchs 15 sowie eine Betriebsbremse eines Kraftfahrzeugs mit den Merkmalen des Patentanspruchs 16 gelöst.

Weitere vorteilhafte Ausgestaltungen der vorliegenden Erfindung werden in den Unteransprüchen angegeben.

Der erfindungsgemäße Sperraktor, insbesondere der erfindungsgemäße Sperraktor für ein Getriebe, beispielsweise ein Bremsengetriebe einer elektrischen Park- und/oder Betriebsbremse, mit den Merkmalen des Patentanspruchs 1 weist ein Gehäuse und einen zu dem Gehäuse entlang einer Achse beweglichen Schlitten mit einem Sperrriegel auf, wobei der Schlitten durch ein antreibbares Aktorgetriebe zwischen einer Offenstellung und einer Sperrstellung entlang eines Sperrweges beweglich ist. Ferner ist der Sperrriegel an dem Schlitten in der Achse beweglich und federnd gehalten, wodurch in der Sperrstellung des Schlittens der Sperrriegel, bevorzugt nach Art einer Ratsche, eine Ausgleichsbewegung vornehmen kann.

Die vorliegende Erfindung beruht auf der Idee, dass der Sperrriegel in der Sperrstellung des Schlittens relativ zu dem Schlitten eine Ausgleichsbewegung entgegen einer Federkraft vornehmen kann, während der Schlitten in der durch das antreibare Aktorgetriebe vorgegebenen Sperrstellung verbleibt. Dadurch soll es möglich sein, dass beispielsweise ein zu sperrendes Getriebeteil, in welches der Sperrriegel zum Sperren eintauchen kann, in eine Richtung einen Freilauf aufweisen kann, und in einer anderen und entgegengesetzten Bewegungsrichtung gesperrt ist.

Der Schlitten gemäß der vorliegenden Erfindung umfasst den Sperrriegel, welcher konfiguriert ist, mit einer später noch im Detail beschriebenen Klinkenverzahnung eines Getriebeteils, beispielsweise eines Klinkenrads, zusammenzuwirken. Die Offenstellung des Schlittens kann dem freigegebenen Zustand der Klinkenverzahnung des Getriebeteils entsprechen, wobei der Schlitten und insbesondere der Sperrriegel des Schlittens nicht in die Klinkenverzahnung des Getriebeteils eintaucht bzw. eingreift und dieses frei beweglich ist. Der Sperrriegel kann in einer Riegelaufnahme in oder an dem Schlitten in der Achse gelagert gehalten sein.

Die Sperrstellung des Schlittens kann dem gesperrten Zustand entsprechen, wobei die Klinkenverzahnung des Getriebeteils bevorzugt in eine der zwei Bewegungsrichtungen gesperrt ist, und in die andere der zwei Bewegungsrichtungen einen Freilauf aufweist. In dieser Sperrstellung des Schlittens wird bevorzugt der Schlitten durch das antreibbare Aktorgetriebe gehalten bzw. fixiert und der Sperrriegel des Schlittens ragt in die Klinkenverzahnung hinein und kann diese in mindestens eine der zwei Bewegungsrichtungen blockieren. Um einen Freilauf in die andere der mindestens zwei Bewegungsrichtungen zu ermöglichen, kann der Sperrriegel eine gefederte Ausweichbewegung vornehmen und in der Achse gegenüber dem Schlitten bewegt werden.

Eine Weiterbildung der vorliegenden Erfindung sieht vor, dass der Sperrriegel an dem Schlitten in der Achse in beide Richtungen gefedert gehalten ist. Mit anderen Worten ist es bevorzugt, dass der Sperrriegel in der Sperrstellung des Schlittens entgegen einer Federkraft sowohl in eine erste Richtung, als auch in eine zweite Richtung entlang der Achse bewegt werden kann. In der einfachsten Form kann der Sperrriegel gegenüber dem Schlitten mittels einer Zug-/Druckfeder gefedert gehalten werden, wobei die Zug-/Druckfeder sowohl als Zugfeder als auch als Druckfeder wirkt.

Bevorzugt kann der Sperrriegel nach Maßgabe einer Weiterbildung der vorliegenden Erfindung beidseitig gefedert abgestützt sein. Die beidseitige gefederte Abstützung kann gemäß einer bevorzugten Weiterbildung durch zwei entgegenwirkende Federn realisiert werden, wobei noch weiter bevorzugt die Federn derart konfiguriert sind, dass diese eine gegeneinander wirkende Federkraft erzeugen. Vorzugsweise spannen sich die zwei entgegenwirkenden Federn gegenseitig vor, wodurch die Position des Sperrriegels in Bezug auf den Schlitten durch das Gleichgewicht der entgegenwirkenden Federn vorgegeben werden kann. Bevorzugt sind die zwei entgegenwirkenden Federn auf gegenüberliegenden Flächen an dem Schlitten und weiterhin bevorzugt an entgegengesetzten Flächen an dem Sperrriegel abgestützt.

Es ist erfindungsgemäß, wenn der Sperrriegel über einen Hubweg gegenüber dem Schlitten beweglich ist, und dass der Hubweg größer ist als der Sperrweg des Schlittens. Der Hubweg des Sperrriegels kann vorzugsweise in einen ersten Teilhub und einen zweiten Teilhub unterteilt werden, wobei der erste Teilhub eine Ausgleichsbewegung beim Ein- und Austauchen des Sperrriegels aus dem zu sperrenden Getriebeteil ermöglicht und der zweite Teilhub näherungsweise dem Sperrweg entspricht. Durch den zweiten Teilhub kann der Sperrriegel beim Bewegen des Schlittens zwischen der Sperrstellung in die Offenstellung in seiner Position in der Achse verbleiben, wobei eine der zwei entgegenwirkenden Federn gespannt bzw. vorgespannt wird.

Eine bevorzugte Weiterbildung der vorliegenden Erfindung sieht vor, dass die zwei entgegenwirkenden Federn unterschiedliche Federkonstanten aufweisen.

Eine Weiterbildung der vorliegenden Erfindung sieht vor, dass die zwei entgegenwirkenden Federn koaxial zueinander angeordnet sind. Bevorzugt sind die zwei entgegenwirkenden Federn Spiralfedern, wobei weiterhin bevorzugt die zwei entgegenwirkenden Federn unterschiedliche Durchmesser aufweisen und ineinanderliegend bzw. radial beabstandet zueinander angeordnet sein können.

Eine Weiterbildung der vorliegenden Erfindung kann aufweisen, dass der Sperrriegel einen Hohlkolbenabschnitt umfasst und dass in dem Hohlkolbenabschnitt auf gegenüberliegenden Körperflächen des Sperrriegels die zwei entgegenwirkenden Federn beabstandet angeordnet sind. Bevorzugt ist der Sperrriegel nach Art eines Hohlkolbens ausgebildet, wobei eine erste Feder der zwei entgegenwirkenden Federn im Bereich einer Innenseite des Hohlkolbens angeordnet sein kann und die zweite Feder der zwei entgegenwirkenden Federn im Bereich einer Außenseite. Die zwei entgegenwirkenden Federn können in radialer Richtung durch den Sperrriegel getrennt angeordnet sein. Somit können sie nicht in Kontakt kommen oder ineinandergreifen. Aus dieser Anordnung der zwei entgegenwirkenden Federn ergibt sich eine besonders kleine und kompakte Bauweise des Schlittens mit dem an dem Schlitten beweglichen und federgehaltenen Sperrriegel.

Darüber hinaus hat es sich als vorteilhaft erwiesen, wenn der Schlitten an dem Sperrriegel in der Achse zwangsgeführt ist. Bevorzugt weist der Schlitten für den Sperrriegel eine Zwangsführung vor, wobei noch weiter bevorzugt der Sperrriegel an dem Schlitten um die Achse drehfest gehalten ist. Mit anderen Worten ist es bevorzugt, wenn der Sperrriegel gegenüber dem Schlitten und/oder dem Gehäuse nicht verdrehbar ist. Die Zwangsführung ist konfiguriert, Kräfte quer zu der Achse aufzunehmen, welche beispielsweise beim Sperren des zusperrenden Getriebeteils durch den Sperrriegel resultieren können.

Weiterbildungsgemäß kann es vorteilhaft sein, wenn der Schlitten in der Achse zwischen zwei Endanschläge beweglich und beidseitig federnd gehalten ist. In einer derartigen Ausgestaltung bietet es sich an, dass eine der zwei entgegenwirkenden Federn jeweils an einem der Endanschläge abgestützt ist. Durch die Endanschläge kann in einer vorteilhaften Ausgestaltung der Sperrriegel an dem Schlitten verlustsicher angeordnet sein. Die zwei entgegenwirkenden Federn können so angeordnet bzw. konfiguriert sein, dass eine Bewegung des Sperrriegels von dem jeweiligen Endanschlag abgefangen werden kann. Dadurch kann der Werkstoff geschont werden.

Eine Weiterbildung der vorliegenden Erfindung sieht vor, dass der Schlitten durch eine Führung in der Achse an dem Gehäuse beweglich gelagert gehalten ist. Die Führung bildet eine Zwangsführung des Schlittens und ist konfiguriert, Kräfte quer zu der Achse aufzunehmen, welche beispielsweise beim Sperren des Klinkenrads resultieren können.

Bevorzugt ist die Führung des Schlittens eine Ausnehmung in dem Gehäuse, wobei ferner gemäß einer Weiterbildung ein zweites Gehäuseteil oder weitere Gehäuseteile vorgesehen sein können, welches bzw. welche den Schlitten in der Ausnehmung des Gehäuses formschlüssig halten. Weiterhin ist es vorteilhaft, wenn das zweite Gehäuseteil eine Lagerung für das Aktorgetriebe ausbildet. Es können weitere Gehäuseteile vorgesehen sein, die beispielsweise eine Antriebseinrichtung und/oder auch Gehäuseteile ganz oder teilweise mit aufnehmen.

Das Aktorgetriebe weist bevorzugt eine Drehachse auf, die senkrecht zu der Achse orientiert ist. Bevorzugt schneidet die Drehachse des Getriebes die Achse innerhalb der Riegelaufnahme, wodurch eine besonders kompakte Bauform realisiert werden kann.

Eine bevorzugte Weiterbildung der vorliegenden Erfindung sieht vor, dass das Aktorgetriebe selbsthemmend ist. Das selbsthemmende Aktorgetriebe verhindert ein ungewünschtes eigenständiges Verstellen des Schlittens von der Sperrstellung in die Offenstellung und vice versa. Beispielsweise kann das selbsthemmende Aktorgetriebe durch ein Spindelgetriebe realisiert werden oder alternativ über einen angetriebenen Exzenter, der mit dem Schlitten derart gekoppelt ist, dass bei einer Drehung des Exzenters um eine Drehachse der Schlitten in der Achse bewegt werden kann.

Das Aktorgetriebe kann antriebsseitig durch die Antriebseinrichtung angetrieben werden und steht abtriebsseitig über den Exzenter mit dem Schlitten in Wirkverbindung, wodurch der Schlitten in der Achse bewegt werden kann. Der Exzenter ist exzentrisch zu der Drehachse des Aktorgetriebes an dem Planetenträger angeordnet, wobei an dieser Stelle bereits angemerkt wird, dass der Exzenter an dem Abtrieb befestigt werden kann, oder integral mit dem Abtrieb ausgebildet sein kann.

Eine vorteilhafte Weiterbildung sieht vor, dass der Exzenter in eine Führungsausnehmung des Schlittens greift. Der Exzenter steht somit zumindest in einer der kartesischen Raumrichtungen mit der Führungsausnehmung des Schlittens in Wirkkontakt, wobei die Führungsausnehmung eine Auslenkung des Exzenters in einer - bevorzugt einer einzigen - Richtung quer zur Achse ermöglicht.

Eine weitere vorteilhafte Ausgestaltung der vorliegenden Erfindung sieht vor, dass der Exzenter in einer Ebene quer zur Drehachse innerhalb Führungsausnehmung beweglich gehalten ist. Demnach ist die Führungsausnehmung sowohl in Richtung der Achse als auch quer zu der Achse derart bemessen, dass der Exzenter innerhalb der Führungsausnehmung beweglich ist, jedoch die Position des Schlittens in der Achse in beide Richtungen zwangsweise vorgegeben ist. Insbesondere ist es vorteilhaft, wenn der Exzenter lediglich mit einer Kontaktfläche der Führungsausnehmung in Wirkkontakt kommen kann, wobei noch weiter bevorzugt die Kontaktfläche der Führungsausnehmung auf einer von der Sperrklinke abgewandten Seite angeordnet ist.

Eine Weiterbildung der vorliegenden Erfindung sieht vor, dass die Führungsausnehmung in der Achse derart bemessen ist, dass eine Verschiebung des Exzenters innerhalb der Führungsausnehmung und innerhalb der Größenordnung eines Bruchteils des Sperrweges möglich ist. Unter der Bemessung innerhalb eines Bruchteils der Größenordnung des Sperrweges ist ein Maß zu verstehen, und kleiner oder gleich 50% des Sperrwegs, vorzugsweise kleiner oder gleich 25%, noch weiter bevorzugt kleiner oder gleich 15%, 10% oder 5% ist. Die Führungsausnehmung soll lediglich so groß bemessen sein, dass ein Verklemmen des Exzenters in der Führungsausnehmung verhindert wird.

Gemäß einer weiteren vorteilhaften Ausgestaltung der vorliegenden Erfindung weist die Führungsausnehmung des Schlittens eine Kulisse auf, die mit dem Exzenter zusammenwirkt. Die Kulisse bildet die Kontaktfläche der Führungsausnehmung. Bei einer Drehung des Exzenters wälzt der Exzenter an der Kulisse, wobei die Kulisse eine nichtlineare Form, vorzugsweise eine Wellenform, aufweist, wodurch die Verschiebung des Schlittens zusätzlich zu der Drehbewegung des Exzenters von der Ausgestaltung der Form der Kulisse abhängig ist.

Weiterhin hat es sich als vorteilhaft erwiesen, wenn der Schlitten in der Offenstellung oder der Sperrstellung durch Federmittel vorgespannt ist. Bevorzugt spannen die Federmittel den Schlitten in die Sperrstellung vor. Bevorzugt bestimmt der Exzenter die maximale Auslenkung des Schlittens in Richtung der Sperrstellung und das Federmittel wirkt in die von dem Exzenter entgegengesetzte Richtung.

Es hat sich als vorteilhaft erwiesen, wenn das Aktorgetriebe ein Planetengetriebe und/oder ein Zykloidengetriebe umfasst.

Bevorzugt umfasst das Planetengetriebe und/oder das Zykloidengetriebe ein Hohlrad, wobei das Hohlrad bevorzugt eine Innenverzahnung aufweist.

Darüber hinaus hat es sich als vorteilhaft erwiesen, wenn das Aktorgetriebe ein Antriebsrad und mindestens ein Umlaufrad aufweist, dass über einen um die Drehachse drehbaren Planetenträger mit dem Abtrieb gekoppelt ist. Das Antriebsrad wird bevorzugt von der Antriebseinrichtung angetrieben und steht in Wirkkontakt mit dem mindestens einen Umlaufrad, wobei das Umlaufrad wiederum mit dem Hohlrad in Wirkverbindung steht.

Das Umlaufrad des Zykloidengetriebes wird durch das Antriebsrad mittels eines Exzenters angetrieben und rollt an dem Hohlrad in einer Orbitalbewegung um die Drehachse ab. Eine Übertragung der Dreh- bzw. Orbitalbewegung des Umlaufrades auf den Abtrieb erfolgt über einen Planetenträger, der einen oder mehrere Pins aufweist, die in Ausnehmungen des Umlaufrades in bekannter Weise greifen.

Das Planetengetriebe weist vorzugsweise mehrere Umlaufräder, auch Planetenräder genannt, auf, die an einem gemeinsamen Planetenträger drehbar angeordnet sind. Der Planetenträger ist um die Drehachse drehbar und bildet den Abtrieb.

Nach Maßgabe einer Weiterbildung der vorliegenden Erfindung ist das Hohlrad in dem Gehäuse feststehend angeordnet und die Antriebseinrichtung treibt das Antriebsrad des Planetengetriebes oder des Zykloidengetriebes an. Sowohl das Antriebsrad und/oder das Hohlrad können bzw. kann vorzugsweise koaxial zu der Drehachse angeordnet sein und das mindestens eine Umlaufrad dreht sich zusammen mit dem Planetenträger um die Drehachse. Die Drehung des Planetenträgers entspricht dem Abtrieb des Planetengetriebes und gibt die Bewegung des Exzenters in einer Umlaufbahn um die Drehachse vor.

Eine Weiterbildung der vorliegenden Erfindung sieht mindestens einen Endanschlag vor, durch den eine Drehung des Planetenträgers um die Drehachse beschränkt ist. Bevorzugt beschränken zwei Endanschläge eine Drehung des Planetenträgers um ca. 180°. Die Endanschläge geben die Lage des Exzenters in einer Endlage vor und geben die Offenstellung und/oder Sperrstellung des Schlittens vor.

Eine Weiterbildung der vorliegenden Erfindung sieht vor, dass mindestens ein Sensor vorgesehen ist, der die Stellung des Schlittens, des Sperrriegels, des Planetenträgers und/oder des Exzenters erfassen kann. Der Sensor kann somit eindeutig den Zustand des Sperraktors erfassen.

Die Antriebseinrichtung kann einen DC-Motor umfassen. Der DC-Motor kann von einer Gleichspannungsquelle, insbesondere einem Stromspeicher eines Kraftfahrzeuges, mit Spannung versorgt werden.

Eine Weiterbildung der vorliegenden Erfindung sieht vor, dass ein Sperrmechanismus vorgesehen ist, und dass der Sperrmechanismus den Sperrriegel in der Sperrstellung gegenüber dem Gehäuse in der Achse feststellen kann. Der Sperrmechanismus kann die Position des Sperrriegels in der Achse festlegen, wenn der Schlitten von der Sperrstellung in die Offenstellung bewegt wird. Dabei kann eine Feder der zwei entgegenwirkenden Federn gespannt werden, insbesondere über den zweiten Teilhubweg gespannt werden. Sobald der Sperrmechanismus den Sperrriegel gegenüber dem Gehäuse freigibt, kann in der Offenstellung des Schlittens der Sperrriegel zurückschnellen, wodurch eine äußerst hohe Reaktionszeit des Sperraktors realisiert werden kann. Der Sperrmechanismus kann beispielsweise ein durch einen elektromagnetischen Aktor, einen Hub- oder Drehmagneten betätigbares Sperrglied umfassen.

Eine Weiterbildung der vorliegenden Erfindung sieht vor, dass der Sperrmechanismus eine Klinkenverzahnung umfasst, in die der Sperrriegel eintauchen kann, wobei der Sperrriegel und die Gegenverzahnung eine korrespondierende Hinterschneidung aufweisen, die zum Sperren des Sperrriegels in der Achse ineinandergreifen können. Demnach kann der Sperrriegel mit der Klinkenverzahnung verhaken und die Klinkenverzahnung sperrt den Sperrriegel in der Achse.

Ein zweiter Aspekt der vorliegenden Erfindung betrifft ein Verfahren zum Betreiben eines Sperraktors, insbesondere eines zuvor beschriebenen Sperraktors, aufweisend ein Gehäuse und einen zu dem Gehäuse in einer Achse beweglichen Schlitten mit einem Sperrriegel. Der Schlitten ist durch ein antreibbares Aktorgetriebe zwischen einer Offenstellung und einer Sperrstellung entlang eines Sperrweges beweglich, wobei der Sperrriegel an dem Schlitten in der Achse beweglich und federnd gehalten und wobei ein Sperrmechanismus vorgesehen ist, der den Sperrriegel in der Sperrstellung gegenüber dem Gehäuse in der Achse feststellen kann. Das Verfahren zum Betreiben eines Sperraktors weist folgende Verfahrensschritte auf:
- Bewegen des Schlittens in einer ersten Richtung aus der Offenstellung in eine Sperrstellung;
- Feststellen des Sperrriegels gegenüber dem Gehäuse in der Sperrstellung des Schlittens durch den Sperrmechanismus;
- Bewegen des Schlittens aus der Sperrstellung in die Offenstellung in eine der ersten Richtung entgegengesetzte zweite Richtung in der Achse und Erzeugen einer Federvorspannung des Sperrriegels in die zweite Richtung;
- Freigeben des Sperrriegels durch den Sperrmechanismus und Bewegen des Sperrriegels durch die Federvorspannung in die zweite Richtung.

Das Verfahren zum Betreiben des Sperraktors beruht im Wesentlichen auf der Erkenntnis, dass das Entriegeln mittels einer Federvorspannung erheblich schneller erfolgen kann als mittels eines durch ein antreibares Aktorgetriebe beweglichen Sperrriegels. Dadurch können die Reaktionszeiten des Sperraktors erheblich reduziert werden. Das Verfahren schlägt daher vor, das antreibbare Aktorgetriebe zum mechanischen Vorspannen zu verwenden, wenn der Sperrmechanismus den Sperrriegel festhält. Der Schlitten spannt bei der Bewegung aus der Sperrstellung in die Offenstellung in der zweiten Richtung eine Feder vor, die in der Offenstellung des Schlittens nach Freigabe durch den Sperrmechanismus schlagartig eine zurückschnellende Bewegung des Sperrriegels in der zweiten Richtung erzeugt.

Die Freigabe des Sperrmechanismus kann entweder durch ein Ansteuern eines entsprechenden Aktors, wie beispielsweise einen Hub- oder Drehmagnet, erfolgen oder für den Fall, dass die Klinkenverzahnung mittels korrespondierender Hinterschnitte den Sperrriegel in der Achse festlegen kann durch eine Bewegung der Klinkenverzahnung in eine Freilaufrichtung.

Ein weiterer Aspekt der vorliegenden Erfindung betrifft ein Getriebe, insbesondere ein Bremsengetriebe, mit einem zuvor beschriebenen Sperraktor und einem drehbaren Klinkenrad.

Ein dritter Aspekt der vorliegenden Erfindung betrifft ein Getriebe, insbesondere ein Bremsgetriebe, mit einem zuvor beschriebenen Sperraktor und einem drehbaren Klinkenrad, wobei der Sperrriegel in die Klinkenverzahnung des Klinkenrades eingreifen kann. Das Klinkenrad kann eine erste und eine zweite Drehrichtung aufweisen, wobei in der Offenstellung des Schlittens das Klinkenrad in beide Drehrichtungen frei drehbar ist und in der Sperrstellung das Klinkenrad in die erste Richtung beweglich ist und in der zweiten Drehrichtung gesperrt ist. In der Sperrstellung greift der Sperrriegel in die Klinkenverzahnung. Bei einer Drehung in der ersten Drehrichtung wird der Sperrriegel ratschenartig durch die Klinkenverzahnung ausgedrückt und durch die Federkraft erneut in die Klinkenverzahnung eingedrückt.

Bevorzugt ist das Klinkenrad in einer Getriebeachse drehbar angeordnet, wobei die Getriebeachse noch weiter bevorzugt parallel zu der Drehachse des Aktorgetriebes des Sperraktors ist.

Weiterhin ist es vorteilhaft, wenn das Gehäuse des Sperraktors ebenfalls ein Getriebegehäuse des Getriebes bildet.

Auch hat es sich als vorteilhaft erwiesen, wenn das Klinkenrad eine Mehrzahl von Zähnen aufweist, wobei der jeweilige Zahn aus einer flachen Flanke und einer zurückspringenden Flanke gebildet ist, die eine Hinterschneidung ausbildet.

Ein letzter Aspekt der vorliegenden Erfindung betrifft eine Bremse, insbesondere eine elektrische Betriebs- und/oder Parkbremse mit einem zuvor beschriebenen Getriebe.

Nachfolgend wird unter Bezugnahme auf die begleitenden Zeichnungen ein Ausführungsbeispiel im Detail beschrieben. Es zeigen:
- Figur 1: eine vereinfachte Explosionsdarstellung eines Getriebes mit einem Klinkenrad und einem Sperraktor, wobei der Sperraktor ein Gehäuse, ein als Planetengetriebe ausgestaltetes Aktorgetriebe und einen Schlitten mit einem Sperrriegel aufweist und der Schlitten durch das antreibbare Aktorgetriebe zwischen einer Offenstellung und einer Sperrstellung zum Sperren des Getriebes beweglich ist,
- Figur 2: eine vereinfachte Draufsicht auf das Getriebe gemäß Figur 1 in der Offenstellung,
- Figur 3: eine vereinfachte Schnittdarstellung des Getriebes gemäß Figur 2 in der Offenstellung,
- Figur 4: eine vereinfachte Draufsicht auf das Getriebe in der Sperrstellung,
- Figur 5: eine vereinfachte Draufsicht auf das Getriebe in der Offenstellung des Schlittens, wobei ein Sperrmechanismus den Sperrriegel fixiert,
- Figur 6: eine Schnittdarstellung des Getriebes und des Sperraktors gemäß Figur 5 in der Offenstellung des Schlittens, wobei ein Sperrmechanismus den Sperrriegel zum Sperren des Getriebes fixiert,
- Figur 7: eine weitere Schnittdarstellung des Getriebes und des Sperraktors gemäß den Figuren 5 und 6,
- Figur 8: eine perspektivische Darstellung einer Weiterbildung des Schlittens, und
- Figur 9: eine Schnittdarstellung des Schlittens gemäß der Figur 8.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

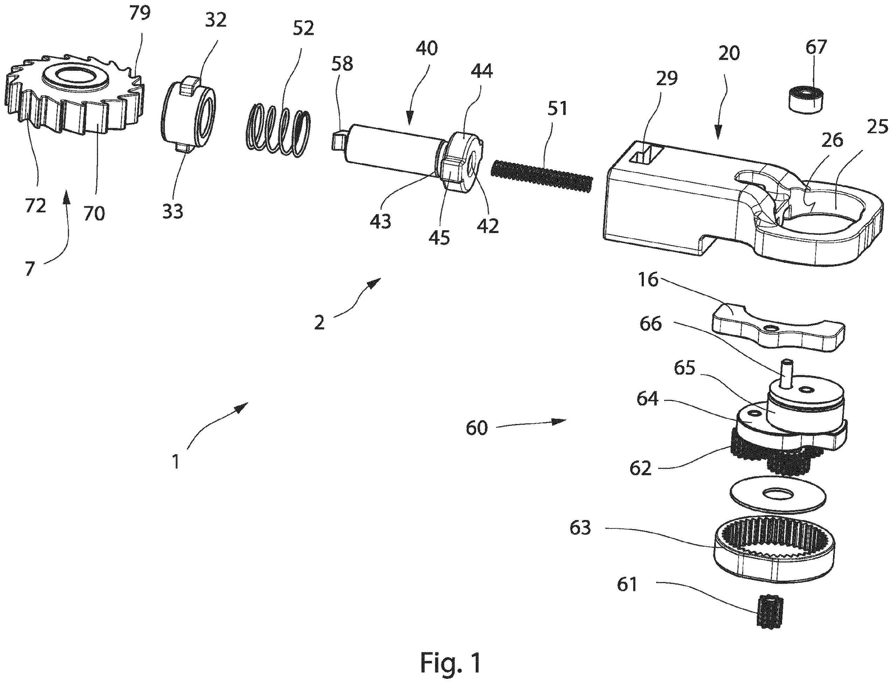

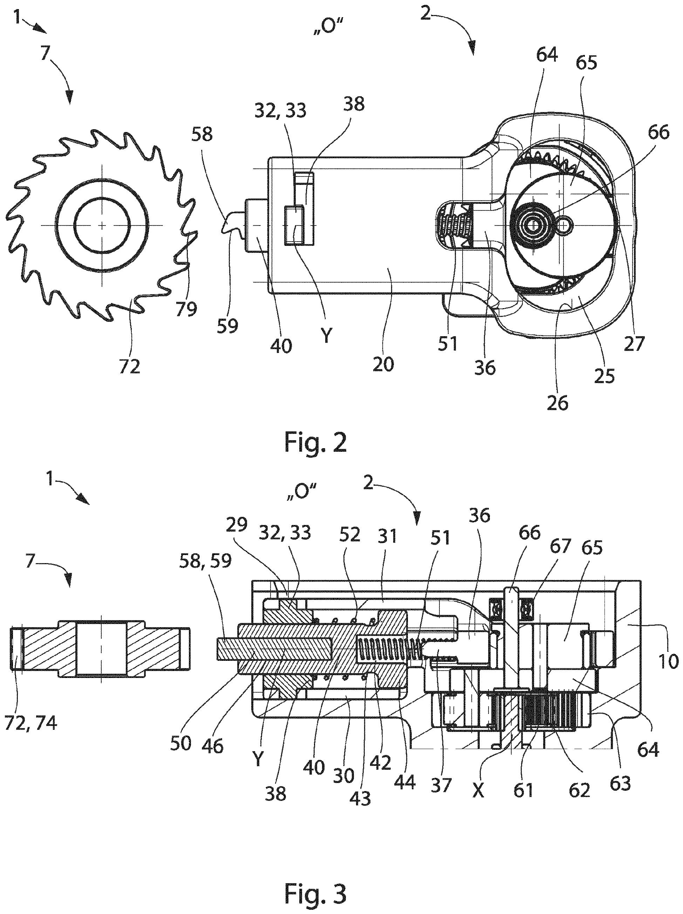

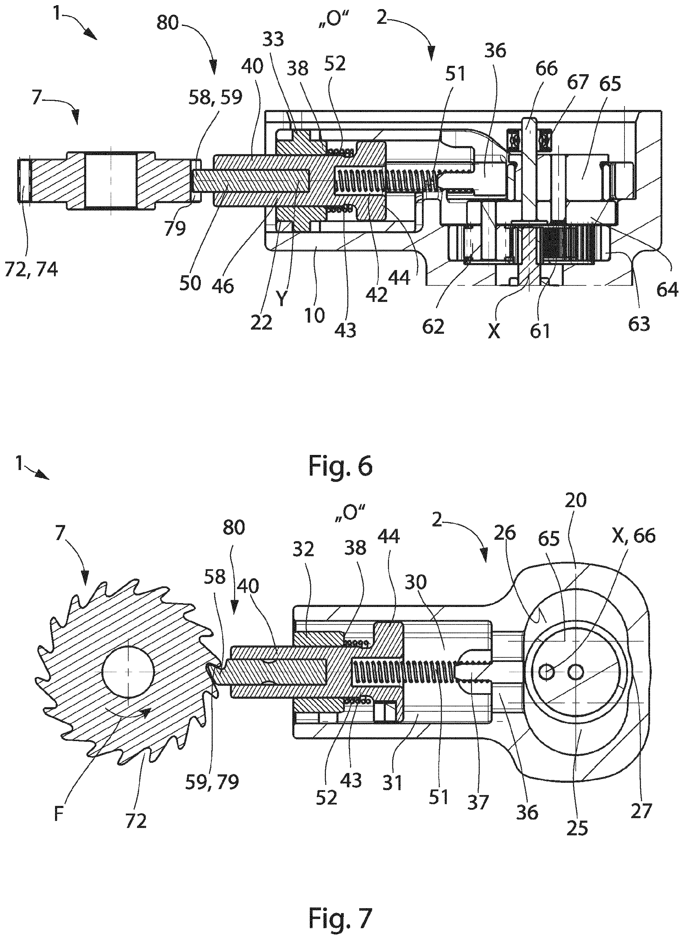

Figur 1 ist eine perspektivische Explosionsdarstellung eines Sperraktors 2 eines Getriebes 1, beispielsweise eines Bremsgetriebes einer elektrischen Betriebsbremse zu entnehmen, die einen Schlitten 20, einen Sperrriegel 40 und ein antreibares Aktorgetriebe 60 umfasst. Ferner umfasst der Sperraktor 2 ein Gehäuse 10, das aus Gründen der Vereinfachung nur in den Figuren 3 und 6 dargestellt ist.

Das Aktorgetriebe 60 kann von einer (nicht dargestellten) Antriebseinrichtung angetrieben werden, welche bevorzugter Weise einen DC-Motor umfassen kann.

Das Gehäuse 10 kann aus mehreren Gehäuseteilen gebildet werden, wobei bevorzugt die Gehäuseteile aus einem Kunststoff, vorzugsweise durch Spritzgießen, hergestellt sind.

Das Gehäuse 10 kann weiterhin ebenfalls die Komponenten des (nicht vollständig dargestellten) Getriebes 1, z.B. ein Klinkenrad 7, einhausen, wobei die Gehäuseteile durch beliebige Verbindungen form-, kraft- und/oder stoffschlüssig miteinander verbunden sein können.

Das Aktorgetriebe 60 kann gemäß des dargestellten Ausführungsbeispiels ein Planetengetriebe sein und weist eine Drehachse X, ein Antriebsrad 61, mindestens ein Umlaufrad 62, die drehbar an einem Planetenträger 64 gehalten sind, und ein Hohlrad 63 auf. Das Antriebsrad 61 kann das Sonnenrad bilden und das mindestens eine Umlaufrad 62 bildet einen Planeten, der durch den Planetenträger 64 in einer Orbitalbahn um die Drehachse X drehbar gehalten ist. Die Drehachse X kann durch das Antriebsrad 61 vorgegeben werden, wobei bevorzugt das Antriebsrad 61 und das Hohlrad 63 konzentrisch angeordnet sind. Der Planetenträger 64 ist über einen Wellenzapfen 66 bevorzugt mittels eines Lagers 67 drehbar an dem Gehäuse 10 abgestützt, wobei der Planetenträger 64 bzw. der Wellenzapfen 66 in der Drehachse X drehbar ist. Das jeweilige Umlaufrad 62 steht sowohl mit dem Hohlrad 63 als auch mit dem Antriebsrad 61 in Eingriff.

Das Antriebsrad 61 kann von der Antriebseinrichtung angetrieben werden.

Der Explosionsdarstellung gemäß Figur 1 kann entnommen werden, dass auf dem Planetenträger 64 ein Exzenter 65 angeordnet, der exzentrisch zu der Drehachse X bevorzugt auf der von dem mindestens einen Umlaufrad 62 abgewandten Seite des Planetenträgers 64 angeordnet ist. Der Exzenter 65 ist drehfest mit dem Planetenträger 64 gekoppelt bzw. verbunden.

Weiterhin kann der Figur 1 entnommen werden, dass der Planetenträger 64 keine rotationssymmetrische Form aufweist, sondern birnenförmig mit einem ovalförmigen Bauchabschnitt und einem quaderähnlichen Halsabschnitt ausgebildet ist. Der Halsabschnitt bildet in beide Umlaufrichtungen um die Drehachse X eine Anschlagsfläche aus.

Der Exzenter 65 bzw. der Planetenträger 64 kann um die Drehachse X zwischen zwei Endlagen um ca. 180° hin und her verdreht werden, wobei in den Endlagen Anschlagsflächen mit einem Gegenanschlag 16 zusammenwirken können. Der Gegenanschlag 16 kann integral durch das Gehäuse 10 ausgebildet werden oder beispielsweise als U-förmiges Gehäuseteil ausgebildet sein. Der Gegenanschlag 16 kann beispielsweise über einen mittig angeordneten Bolzen an dem Gehäuse 10 abgestützt sein.

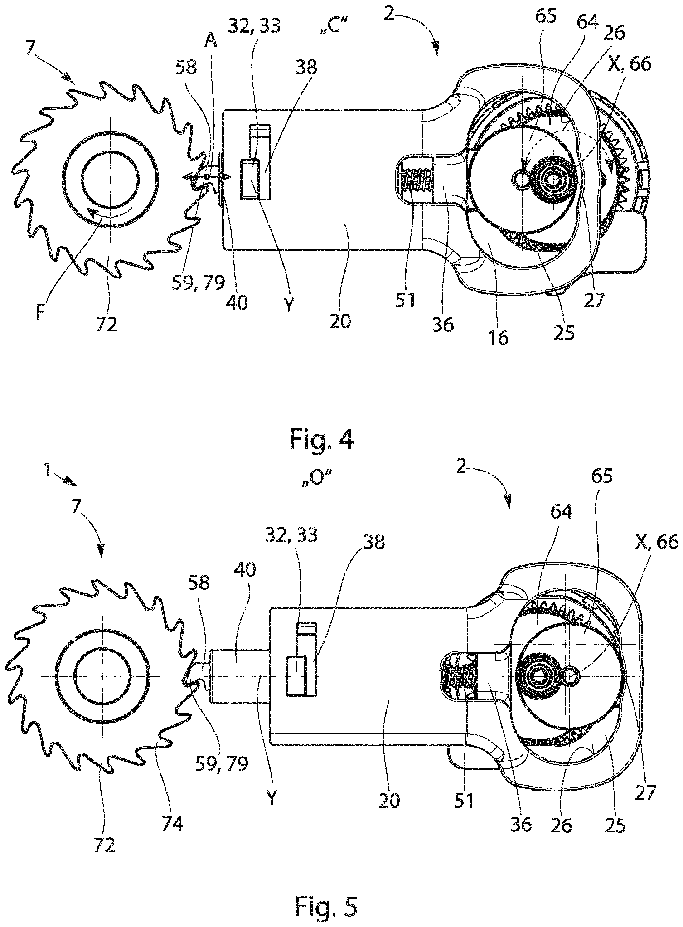

Der Schlitten 20 ist an dem Gehäuse 10 in einer Achse Y beweglich gelagert gehalten und kann entlang eines Sperrweges entlang der Achse Y in einer ersten Richtung von einer Offenstellung, gezeigt in den Figuren 2, 3, 5, 6 und 7 in eine Sperrstellung, gezeigt in Figur 4, durch das antreibbare Aktorgetriebe 60 bewegt werden und in einer zweiten Richtung von der Sperrstellung zurück in die Offenstellung. Die Achse Y ist bevorzugt senkrecht zu der Drehachse X angeordnet. Zum besseren Verständnis sind die Figuren, die den Schlitten in der Offenstellung zeigen, mit "O" gekennzeichnet und die Figuren, die den Schlitten in der Sperrstellung zeigen, mit "C" gekennzeichnet.

Der Schlitten 20 kann näherungsweise eine rechteckige Form aufweisen und weist ferner in der Achse Y auf gegenüberliegenden Seiten einen ersten Endbereich und einen zweiten Endbereich auf.

Beispielsweise unter Bezugnahme auf die Figuren 1 oder 2 ist zu erkennen, dass der Schlitten 20 eine Führungsausnehmung 25 aufweist. Die Führungsausnehmung 25 ist in dem ersten Endbereich des Schlittens 20 angeordnet und kann bevorzugt als Durchgangsöffnung ausgebildet sein. Die Führungsausnehmung 25 bildet eine Kontaktfläche, auf der der Exzenter 65 bei einer Umlaufbewegung um die Drehachse X entlanggleiten kann.

In der Führungsausnehmung 25 ist eine Kulisse 26 gebildet oder - mit anderen Worten ausgedrückt - ist die Kontaktfläche als Kulisse 26 für den Exzenter 65 ausgebildet. Die Führungsausnehmung 25 ist in der Achse Y an die Größe des Exzenters 65 angepasst, wodurch der Exzenter 65 in der Achse Y in beide Richtungen die Lage des Schlittens 20 vorgibt. Allerdings kann die Führungsausnehmung 25 geringförmig größer bemessen sein als der Exzenter 65, um ein Verkanten des Exzenters 65 innerhalb der Führungsausnehmung 25 zu vermeiden. Die Führungsausnehmung 25 kann in der Achse X innerhalb der Größenordnung eines Bruchteils des Sperrweges größer ausgebildet sein, wobei die Führungsausnehmung 25 vorzugsweise kleiner oder gleich 25%, noch weiter bevorzugt kleiner oder gleich 15%, 10%, 5% oder 2,5% ist.

Ferner kann der Figur 2 entnommen werden, dass die Kulisse 26 einen als Vertiefung ausgebildeten Endlangenabschnitt 27 aufweist. Der Endlangenabschnitt 27 ist in dem ersten Endbereich innerhalb der Führungsausnehmung 25 auf der dem Exzenter 65 zugewandten Seite angeordnet und konfiguriert, dass der Exzenter 65 zur selbsthemmenden Sicherung in der Endlage eintauchen kann.

Unter Bezugnahme auf die Schnittzeichnungen gemäß den Figuren 3, 6 und 7 ist ersichtlich, dass der Schlitten 20 eine Riegelaufnahme 30 aufweist, die entlang der Achse Y ausgebildet ist. Die Riegelaufnahme 30 kann nach Art einer Bohrung in dem Schlitten 20 ausgebildet sein und erstreckt sich von einem offenen Ende in dem zweiten Endbereich in den Schlitten 20 bis zu einem ersten Endanschlag 36 hinein. Die Riegelaufnahme 30 weist eine Riegelführung 31 auf, die den Sperrriegel 40 entlang der Achse Y in der Riegelaufnahme 30 zwangsführt, wobei der Sperrriegel 40 bevorzugt durch die Riegelführung 31 drehfest gelagert wird. Durch die drehfeste Lagerung kann der Sperrriegel 40 in der Achse Y nicht um die Achse Y gedreht werden. Das offenen Ende der Riegelaufnahme 30 kann durch einen Deckel 32 verschlossen werden, der von dem Sperrriegel 40 durchgriffen werden kann.

Der Deckel 32 kann Haltenasen 33 aufweisen, die mit der Form der Riegelführung 31 korrespondieren. Die Haltenasen 33 ermöglichen im Zusammenspiel mit einer korrespondierenden Einbuchtung 29 (siehe Figur 1) in dem Schlitten 20 eine Bajonettverbindung.

Der Sperrriegel 40 ist entlang eines Hubweges entlang der Achse Y federbeweglich gegenüber dem Schlitten 20 in der Riegelführung 31 beweglich gehalten und ragt mit einem freien Ende durch das offene Ende der Riegelaufnahme 30 aus dem Schlitten 20 heraus. An dem freien Ende ist eine Sperrklinke 58 angeordnet, die in Eingriff mit einer korrespondieren Klinkenverzahnung 72 gebracht werden kann, wie später im Detail beschrieben werden wird.

Der Sperrriegel 40 kann, wie in der Schnittdarstellung gemäß Figur 3 dargestellt ist, mehrteilig ausgebildet sein und einen Klinkenstift 50 mit der Sperrklinke 58 umfassen. Der Klinkenstift 50 kann in eine entsprechende Stiftaufnahme 46 - bevorzugt verlustsicher - eingesetzt sein, wobei weiterhin bevorzugt der Klinkenstift 50 und der Sperrriegel 40 aus unterschiedlichen Materialien hergestellt sind. Beispielsweise kann der Klinkenstift 50 mit der Sperrklinke 58 aus einem metallischen Werkstoff hergestellt sein, und der verbleibende Teil des Sperrriegels 40 aus einem Kunststoff.

Die federbewegliche Lagerung des Sperrriegels 40 gegenüber dem Schlitten 20 kann durch mindestens eine Feder erfolgen, die beidseitig in der Achse Y wirkt. Gemäß dem dargestellten Ausführungsbeispiel wird bevorzugt die federbewegliche Lagerung des Sperrriegels 40 gegenüber dem Schlitten 20 durch zwei entgegenwirkende Federn 51, 52 bewerkstelligt, wobei die erste Feder 51 den Sperrriegel 40 in die erste Richtung vorspannt und die zweite Feder den Sperrriegel 40 in die zweite entgegengesetzte Richtung vorspannt.

Die erste Feder 51 liegt einenends an dem ersten Endanschlag 36 und anderenends an dem Sperrriegel 40 an. Gemäß der dargestellten Ausführungsform kann die erste Feder 51 einenends mittels eines Federdorns 37 an dem Schlitten 20 abgestützt sein und anderenends in eine in dem Sperrriegel 40 als zylinderförmige Ausnehmung ausgestaltete Federaufnahme 42 greifen. Die erste Feder 51 ist somit im Bereich einer Innenseite des nach Art eines Hohlkolbens ausgebildeten Sperrriegels 40 angeordnet.

Die zweite Feder 52 umgibt den Sperrriegel 40 im Bereich einer Außenseite und liegt einenends an dem Deckel 32 und anderenends an dem Sperrriegel 40 an. Gemäß der dargestellten Ausführungsform kann die zweite Feder 52 einenends an dem als Federschuh oder Federlager ausgebildeten Deckel 32 abgestützt sein und anderenends an einem Kragen 44 des Sperrriegel 40 anliegen. Der Deckel bildet den zweiten Endanschlag 38.

Der Sperrriegel 40 kann einen Hohlkolbenabschnitt 43 aufweisen, wobei in dem Hohlkolbenabschnitt 43 auf gegenüberliegenden Körperflächen des Sperrriegels 40 die zwei entgegenwirkenden Federn 51, 52 in der Achse Y bereichsweise überlappend angeordnet sind. Die zwei entgegenwirkenden Federn 51, 52 sind in der radialen Richtung durch den Sperrriegel 40 getrennt angeordnet und können daher nicht ineinandergreifen. Auch ergibt sich eine besonders kompakte Bauweise durch diese Anordnung.

Der Sperrriegel 40 wird innerhalb des Hubweges durch ein Gleichgewicht zwischen den beiden entgegenwirkenden Federn 51, 52 gefedert gehalten. Der Hubweg des Sperrriegels 40 ist größer als der Sperrweg des Schlittens 20, wobei der Hubweg in einen ersten Teilhub und einen zweiten Teilhub unterteilt werden kann.

Der erste Teilhub ermöglicht in der Sperrstellung des Schlittens 20 gemäß Figur 4 eine Ausgleichsbewegung beim Ein- und Austauchen des Sperrriegels 40 in eine Freilaufrichtung der Klinkenverzahnung 72. In Figur 4 ist sowohl die Freilaufrichtung "F" als auch die Ausgleichsbewegung "A" mit Pfeillinien gekennzeichnet. Der zweite Teilhub des Sperrriegels 40 entspricht näherungsweise dem Sperrweg des Schlittens 20.

Durch den zweiten Teilhub kann der Sperrriegel 40 beim Bewegen des Schlittens 20 zwischen der Sperrstellung in die Offenstellung "O" gemäß den Figuren 5, 6 und 7 in seiner Position in der Achse Y verbleiben, wobei die zweite Feder 52 durch ein Zusammendrücken vorgespannt wird.

Damit der Sperrriegel 40 bei der Bewegung des Schlittens 20 von der Sperrstellung "C" in die Offenstellung "O" verbleibt, ist ein Sperrmechanismus 80 vorzusehen, der den Sperrriegel 40 gegenüber dem Gehäuse 10 in der Achse Y fixiert. Der Sperrmechanismus 80 kann bei einer Bewegung des Schlittens 20 aus der Sperrstellung "C" in die Offenstellung "O" ein Mitführen des Sperrriegels 40 verhindern, wodurch der Sperrriegel 40 weiterhin in die Klinkenverzahnung 72 eingreifen kann, um das Getriebe 1 bzw. das Klinkenrad 7 zu sperren.

Der Sperrmechanismus 80 kann einen elektromagnetischen Aktor, beispielsweise einen Hubmagneten oder Drehmagneten umfassen, der zum Sperren des Sperrriegels 40 vor oder zeitgleich mit der Bewegung des Schlittens 20 aus der Sperrstellung "C" in die Offenstellung "O" zum Sperren des Sperrriegels 40 aktiviert werden kann.

In dem dargestellten Ausführungsbeispiel wird der Sperrmechanismus 80 durch eine Ausgestaltung der Sperrklinke 58 und der Klinkenverzahnung 72 gebildet. Sowohl die Sperrklinke 58 als auch die Klinkenverzahnung 72 bilden eine Hinterschneidung 59, 79 aus, wobei die beiden Hinterschneidungen 59, 79 korrespondieren und der Art ineinandergreifen können, dass eine Verschiebung des Sperrriegels 40 in die zweite Richtung entlang der Achse Y gesperrt ist. Um einen solchen Sperrmechanismus 80 freizugeben, wird die Klinkenverzahnung 72 zunächst geringfügig in der Freilaufrichtung "F" - sieh Figur 7 - bewegt.

Die Klinkenverzahnung 72 weist eine Mehrzahl von Zähnen 74 auf, wobei der jeweilige Zahn 74 aus einer flachen Flanke und einer zurückspringenden Flanke gebildet ist, die eine Hinterschneidung 79 ausbildet.

Sobald der Sperrmechanismus 80 den Sperrriegel 40 freigibt, wird dieser durch die Vorspannung der zweiten Feder 52 schlagartig in der Achse Y in der zweiten Richtung zugestellt, wodurch das Getriebe 1 bzw. die Klinkenverzahnung 72 bzw. das Klinkenrad 7 freigegeben wird.

Für den Fall, dass der Sperrmechanismus 80 durch die korrespondierenden Hinterschneidungen 59, 79 ausgebildet ist, erfolgt das Freigeben des Sperrriegels durch den Sperrmechanismus 80 zunächst durch eine Bewegung der Klinkenverzahnung 72 in der Freilaufrichtung, wie sie symbolisch in Figur 7 anhand einer Pfeillinie eingezeichnet ist.

Durch die Federvorspannung schnellt der Sperrriegel 40 in die Ausgangsstellung gemäß den Figuren 2 und 3 zurück, wobei der Sperrriegel durch die Federkraft der ersten Feder 51 abgebremst wird und in einem Gleichgewichtszustand zwischen der ersten Feder 51 oder zweiten Feder 52 innerhalb des Hubweges seine Ausgangsstellung einnimmt.

Die Funktionsweise und das Verfahren zum Betreiben des Sperraktors 2 zum Sperren des Getriebes 1 kann daher wie folgt beschrieben werden: Zunächst wird der Schlitten 20 in der ersten Richtung entlang der Achse Y aus der Offenstellung "O" in die Sperrstellung "C" bewegt.

Hierzu kann eine (nicht dargestellte) Antriebseinrichtung 5 angesteuert werden, die das Aktorgetriebe 60 antreibt und den Exzenter 65 um näherungsweise 180° gemäß der in Figur 4 gezeigten gestrichelten Doppelpfeillinie dreht. Dabei schiebt sich der Exzenter 65 entlang der Kulisse 26 und schiebt dabei den Schlitten 20 in der ersten Richtung entlang der Achse Y aus der Offenstellung "O" in die Sperrstellung "C".

In der Sperrstellung "C" gemäß Figur 4 wird das Getriebe 1 durch ein Eingreifen des Sperrriegels 40 in die Klinkenverzahnung 72 in eine Richtung gesperrt. Ein Freilauf in eine entgegengesetzte Richtung wird durch eine zuvor beschriebene Ausgleichsbewegung des Sperrriegels 40 ermöglicht, wobei der Sperrriegel 40 bei der Ausgleichsbewegung durch das Zusammenwirken der Klinkenverzahnung 72 mit der Sperrklinke 58 aus der Klinkenverzahnung 72 ausgedrückt wird, und durch die Federkraft der mindestens einen Feder 51, 52 wieder in die Klinkenverzahnung 72 eingedrückt wird.

Zum Aktivieren der "Schnellentriegelung" des Getriebes 1 wird der Sperrriegel 40 in der Sperrstellung "C" des Schlittens 20 durch den Sperrmechanismus 80 gegenüber dem Gehäuse 10 festgestellt und anschließend kann der Schlitten 20 aus der Sperrstellung "C" in die Offenstellung "O" durch das angetriebene Aktorgetriebe 60 bewegt werden, wobei eine Federvorspannung des Sperrriegels 40 in die zweite Richtung erzeugt wird. In diesem Zustand ist das Getriebe 1 gesperrt, jedoch der Sperrriegel 40 ist für eine "Schnellentriegelung" vorgespannt.

Zum Schnellentriegeln des Getriebes 1 wird der Sperrriegel 40 durch den Sperrmechanismus 80 freigegeben und wird durch die Federvorspannung in die zweite Richtung aus dem Eingriff in die Klinkenverzahnung 72 bewegt.

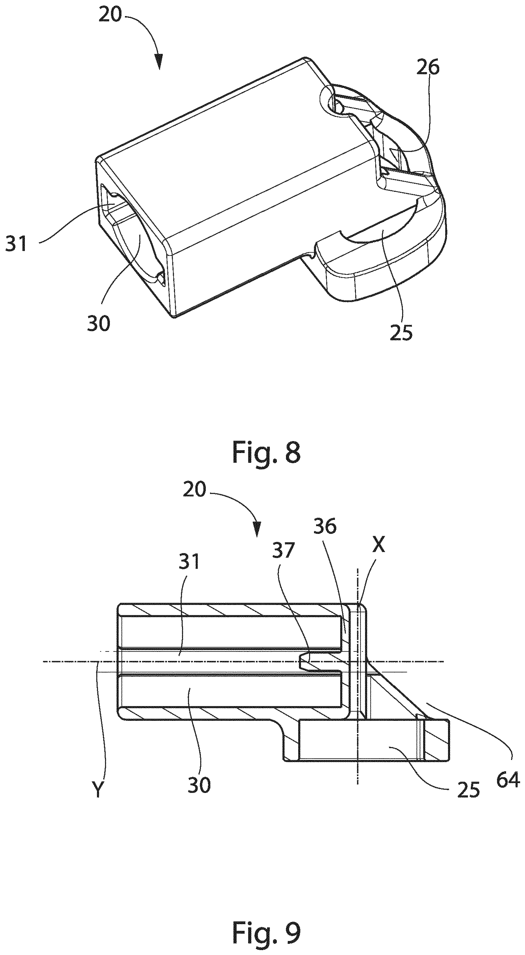

Figur 8 zeigt eine perspektivische Darstellung einer Weiterbildung des Schlittens 20, der eine besonders kompakte Bauweise in der Achse Y aufweist.

Im Gegensatz zu dem unter Bezugnahme auf die Figuren 1-7 beschriebenen Schlitten 20 ist die Führungsausnehmung 25 nicht entlang der Achse Y neben der Riegelaufnahme 30 angeordnet, sondern in der Orientierung der Drehachse X neben der Riegelaufnahme 30 angeordnet. Bevorzugt ist die Führungsausnehmung 25, wie in Figur 9 dargestellt ist, in der Projektion der Drehachse X überlappend zu der Riegelaufnahme 30 angeordnet, wodurch eine besonders kompakte Bauweise in der Achse Y ermöglicht werden kann.

Aus Gründen der Vereinfachung werden in den Figuren 8 und 9 weder der Deckel 32 mit Haltenasen 33 noch die korrespondierende Einbuchtung 29 (siehe Figur 1) in dem Schlitten 20 zur Bildung einer Bajonettverbindung dargestellt. Der Deckel 32 kann in analoger Weise - wie bereits zuvor beschrieben - die Riegelaufnahme 30 abschließen und einen zweiten Endanschlag 38 ausbilden.

### Bezugszeichenliste

- 1: Getriebe
- 2: Sperraktor
- 5: Antriebseinrichtung
- 7: Klinkenrad
- 10: Gehäuse
- 16: Gegenanschlag
- 20: Schlitten
- 25: Führungsausnehmung
- 26: Kulisse
- 27: Endlagenabschnitt
- 29: Einbuchtung
- 30: Riegelaufnahme
- 31: Riegelführung
- 32: Deckel
- 33: Haltenasen
- 36: erster Endanschlag
- 37: Federdorn
- 38: zweiter Endanschlag
- 40: Sperrriegel
- 42: Federaufnahme
- 43: Hohlkolbenabschnitt
- 44: Kragen
- 46: Stiftaufnahme
- 50: Klinkenstift
- 51: erste Feder
- 52: zweite Feder
- 58: Sperrklinke
- 59: Hinterschneidung
- 60: Aktorgetriebe
- 61: Antriebsrad
- 62: Umlaufrad
- 63: Hohlrad
- 64: Planetenträger
- 65: Exzenter
- 66: Wellenzapfen
- 67: Lager
- 72: Klinkenverzahnung
- 74: Zahn
- 79: Hinterschneidung
- 80: Sperrmechanismus

- A: Ausgleichbewegung
- C: Sperrstellung
- F: Freilaufrichtung
- O: Offenstellung
- X: Drehachse
- Y: Achse

## Patentansprüche

1. Sperraktor (2), insbesondere für ein Getriebe (1) einer elektrischen Park- und/oder Betriebsbremse, aufweisend
- ein Gehäuse (10),
- ein zu dem Gehäuse (10) in einer Achse (L) beweglicher Schlitten (20) mit einem Sperrriegel (40),
- wobei der Schlitten (20) durch ein antreibbares Aktorgetriebe (60) zwischen einer Offenstellung und einer Sperrstellung entlang eines Sperrweges beweglich ist,
- **dadurch gekennzeichnet, dass**
- der Sperrriegel (40) in einer Riegelaufnahme in oder an dem Schlitten (20) in der Achse (L) gelagert gehalten ist, dass der Sperrriegel (40) an dem Schlitten (20) in der Achse (L) beweglich federnd gehalten ist, und dass der Sperrriegel (40) über einen Hubweg gegenüber dem Schlitten (20) beweglich ist, und dass der Hubweg größer ist als der Sperrweg des Schlittens (20).

2. Sperraktor (2) nach Anspruch 1,
**dadurch gekennzeichnet, dass**
der Sperrriegel (40) beidseitig gefedert abstützt ist.

3. Sperraktor (2) nach Anspruch 1 oder 2,
**dadurch gekennzeichnet, dass**
der Sperrriegel (40) an dem Schlitten (20) innerhalb des Hubweges beidseitig gefedert abstützt ist.

4. Sperraktor (2) nach einem der vorgenannten Ansprüche,
**dadurch gekennzeichnet, dass**
der Sperrriegel (40) durch zwei entgegenwirkende Federn (51, 52) in der Achse (Y) abstützt ist.

5. Sperraktor (2) nach Anspruch 4,
**dadurch gekennzeichnet, dass**
die zwei entgegenwirkenden Federn (51, 52) koaxial zueinander angeordnet sind.

6. Sperraktor (2) nach Anspruch 4 oder 5,
**dadurch gekennzeichnet, dass**
der Sperrriegel (40) einen Hohlkolbenabschnitt (43) aufweist und dass in dem Hohlkolbenabschnitt (43) in radialer Richtung bezogen auf die Achse (L) auf gegenüberliegenden Körperflächen des Sperrriegels (40) die zwei entgegenwirkenden Federn (51, 52) angeordnet sind.

7. Sperraktor (2) nach einem der Ansprüche 4 bis 6,
**dadurch gekennzeichnet, dass**
der Schlitten (20) in der Achse (L) zwischen zwei Endanschlägen (36, 38) beweglich und beidseitig federnd gehalten ist, und dass eine der zwei entgegenwirkenden Federn (51, 52) jeweils an einem der Endanschläge (36, 38) abgestützt ist.

8. Sperraktor (2) nach einem der vorgenannten Ansprüche, **dadurch gekennzeichnet, dass** der Schlitten (20) den Sperrriegel (40) in der Achse (L), vorzugsweise in der Achse (L) drehfest, zwangsführt.

9. Sperraktor (2) nach einem der vorgenannten Ansprüche, **dadurch gekennzeichnet, dass** das Aktorgetriebe (60) selbsthemmend ist.

10. Sperraktor (2) nach einem der vorgenannten Ansprüche, **dadurch gekennzeichnet, dass**
das Aktorgetriebe (60) über einen Exzenter (65) mit dem Schlitten (20) gekoppelt ist und bei einer Drehung des Exzenters (65) der Schlitten (20) in der Achse (L) bewegt werden kann.

11. Sperraktor (2) nach einem der vorgenannten Ansprüche, **dadurch gekennzeichnet, dass** mindestens ein Sensor vorgesehen ist, der die Stellung des Schlittens (20), des Sperrriegels (40), des Aktorgetriebes (60) und/oder des Exzenters (65) erfassen kann.

12. Sperraktor (2) nach dem Oberbegriff des Anspruchs 1 oder nach einem der vorgenannten Ansprüche,
**dadurch gekennzeichnet, dass**
ein Sperrmechanismus (80) vorgesehen ist, und dass der Sperrmechanismus (80) den Sperrriegel (40) in der Sperrstellung gegenüber dem Gehäuse (10) in der Achse (L) feststellt.

13. Sperraktor (2) nach Anspruch 12,
**dadurch gekennzeichnet, dass**
der Sperrmechanismus (80) eine Klinkenverzahnung (72) umfasst, in die der Sperrriegel (40) eintauchen kann, wobei der Sperrriegel (40) und die Klinkenverzahnung (72) korrespondierende Hinterschneidungen (59, 79) aufweisen, die zum Sperren des Sperrriegels (40) in der Achse (L) ineinander greifen können.

14. Verfahren zum Betreiben eines Sperraktors (2), insbesondere mit einem Sperraktor (2) nach einem der Ansprüche 12 oder 13, aufweisend die Verfahrensschritte:
- Bewegen des Schlittens (20) in einer ersten Richtung aus der Offenstellung (O) in eine Sperrstellung (C);
- Feststellen des Sperrriegels (40) in der Sperrstellung (C) des Schlittens (20) durch den Sperrmechanismus (80) gegenüber dem Gehäuse (10);
- Bewegen des Schlittens (20) aus der Sperrstellung (C) in die Offenstellung (O) in eine der ersten Richtung entgegengesetzte zweite Richtung in der Achse (L) und Erzeugen einer Federvorspannung des Sperrriegels (40) in die zweite Richtung;
- Freigeben des Sperrriegels (40) durch den Sperrmechanismus und Bewegen des Sperrriegels (40) durch die Federvorspannung in die zweite Richtung.

15. Getriebe (1), insbesondere Bremsgetriebe, mit einem Sperraktor (2) nach einem der Ansprüche 1 bis 13 und einem in einer Getriebeachse drehbaren Klinkenrad (7).

16. Betriebs- und/oder Parkbremse, insbesondere Betriebsbremse und/oder Parkbremse eines Kraftfahrzeugs, mit einem Getriebe (1) nach Anspruch 15.

## Claims

1. Locking actuator (2), in particular for a transmission (1) of an electric parking and/or service brake, comprising
- a housing (10),
- a carriage (20) with a locking bolt (40) which is moveable in an axis (L) toward the housing (10),
- wherein the carriage (20) is moveable, by means of a drivable actuator transmission (60), along a locking distance between an open position and a locked position,
- **characterized in that**
- the locking bolt (40) is held mounted in a bolt receptacle in or on the carriage (20) in the axis (L), **in that** the locking bolt (40) is held on the carriage (20) moveably and resiliently in the axis (L), and **in that** the locking bolt (40) is moveable over a stroke distance relative to the carriage (20), and **in that** the stroke distance is larger than the locking distance of the carriage (20).

2. Locking actuator (2) in accordance with claim 1,
**characterized in that**
the locking bolt (40) is supported on both sides with a spring suspension.

3. Locking actuator (2) in accordance with claim 1 or 2,
**characterized in that**
the locking bolt (40) is supported on the carriage on both sides with a spring suspension within the stroke distance.

4. Locking actuator (2) in accordance with any of the preceding claims,
**characterized in that**
the locking bolt (40) is supported in the axis (Y) by means of two counteracting springs (51, 52).

5. Locking actuator (2) in accordance with claim 4,
**characterized in that**
the two counteracting springs (51, 52) are arranged coaxially to each other.

6. Locking actuator (2) in accordance with claim 4 or 5,
**characterized in that**
the locking bolt (40) comprises a hollow piston section (43) and **in that** the two counteracting springs (51, 52) are arranged in the hollow piston section (43) in a radial direction in relation to the axis (L) on oppositely disposed body surfaces of the locking bolt (40).

7. Locking actuator (2) in accordance with any of claims 4 to 6
**characterized in that**
the carriage (20) is held moveably and, on both sides, resiliently, in the axis (L) between two end stops (36, 38), and **in that** one of the two counteracting springs (51, 52) is supported on a respective one of the end stops (36, 38).

8. Locking actuator (2) in accordance with any of the preceding claims,
**characterized in that**
the carriage (20) forcibly guides the locking bolt (40) in the axis (L), preferably non-rotatably in the axis (L).

9. Locking actuator (2) in accordance with any of the preceding claims,
**characterized in that** the actuator transmission (60) is self-locking.

10. Locking actuator (2) in accordance with any of the preceding claims,
**characterized in that**
the actuator transmission (60) is coupled to the carriage (20) via an eccentric (65) and **in that**, when the eccentric (65) is rotated, the carriage (20) can be moved in the axis (L).

11. Locking actuator (2) in accordance with any of the preceding claims,
**characterized in that**
at least one sensor is provided, which can detect the position of the carriage (20), of the locking bolt (40), of the actuator transmission (60) and/or of the eccentric (65).

12. Locking actuator (2) in accordance with any of the preceding claims,
**characterized in that**
a locking mechanism (80) is provided, and **in that** the locking mechanism (80) secures the locking bolt (40) in the locked position in relation to the housing (10) in the axis (L).

13. Locking actuator (2) in accordance with claim 12,
**characterized in that**
the locking mechanism (80) includes a ratchet toothing (72) with which the locking bolt (40) can engage, wherein the locking bolt (40) and the ratchet toothing (72) comprise corresponding undercuts (59, 79), which can engage with each other in the axis (L) in order to lock the locking bolt (40).

14. Method for operating a locking actuator (2), in particular having a locking actuator (2) in accordance with either of claims 12 or 13, comprising the following method steps:
- moving the carriage (20) in a first direction from the open position (O), into a locked position (C);
- securing the locking bolt (40) in the locked position (C) of the carriage (20) in relation to the housing (10) by means of the locking mechanism (80);
- moving the carriage (20) from the locked position (C) into the open position (O) in a second direction in the axis (L) which is opposite the first direction and generating a spring preload of the locking bolt (40) in the second direction;
- releasing the locking bolt (40) by means of the locking mechanism and moving the locking bolt (40) in the second direction by means of the spring preload.

15. Transmission (1), in particular a brake transmission, having a locking actuator (2) in accordance with any of claims 1 to 13 and having a ratchet wheel (7) which is rotatable in a transmission axis.

16. Service and/or parking brake, in particular a service brake and/or a parking brake of a motor vehicle having a transmission (1) in accordance with claim 15.

## Revendications

1. Actionneur de blocage (2), notamment pour une transmission (1) d'un frein électrique de parking et/ou de service comprenant :
- un boîtier (10),
- un chariot (20) mobile par rapport au boîtier (10) selon un axe (L) et ayant un verrou de blocage (40),
- le chariot (20) étant déplacé par une transmission d'actionneur, entraîné (60) entre une position d'ouverture et une position de blocage selon une course de blocage,
**caractérisé en ce que**
le verrou de blocage (40) est tenu dans un logement de verrou ou sur le chariot (20) selon l'axe (L),
- le verrou de blocage (40) est tenu de façon mobile par ressort selon l'axe (L) sur le chariot (20), et
- le verrou de blocage (40) est mobile par rapport au chariot (20) selon une course de dégagement par rapport au chariot (20), et
- la course de dégagement est supérieure à la course de blocage du chariot (20).

2. Actionneur de blocage (2) selon la revendication 1,
**caractérisé en ce que**
le verrou de blocage (40) s'appuie de façon élastique des deux côtés.

3. Actionneur de blocage (2) selon la revendication 1 ou 2,
**caractérisé en ce que**
le verrou de blocage (40) est appuyé de manière élastique des deux côtés sur le chariot (20) dans la course de dégagement.

4. Actionneur de blocage (2) selon l'une des revendications précédentes, **caractérisé en ce que**
le verrou de blocage (40) est appuyé par deux ressorts antagonistes (51, 52) selon l'axe (Y).

5. Actionneur de blocage (2) selon la revendication 4,
**caractérisé en ce que**
les deux ressorts antagonistes (51, 52) sont coaxiaux l'un par rapport à l'autre.

6. Actionneur de blocage (2) selon la revendication 4 ou 5,
**caractérisé en ce que**
le verrou de blocage (40) comporte un segment de piston creux (43) et, les deux ressorts antagonistes (51, 52) sont montés dans le segment de piston creux (43), sur les surfaces opposées du corps du verrou de blocage (40), rapportées à la direction radiale sur l'axe (L).

7. Actionneur de blocage (2) selon l'une des revendications 4 à 6, **caractérisé en ce que**
le chariot (20) est tenu de façon mobile, élastiquement, sur les deux côtés dans l'axe (L) entre deux butées de fin de course (36, 38), et
- l'un des deux ressorts antagonistes (51, 52) s'appuie respectivement contre l'une des butées de fin de course (36, 38).

8. Actionneur de blocage (2) selon l'une des revendications précédentes, **caractérisé en ce que**
le chariot (20) guide de manière forcée le verrou de blocage (40) selon l'axe (L) de préférence solidairement en rotation dans l'axe (L).

9. Actionneur de blocage (2) selon l'une des revendications précédentes, **caractérisé en ce que**
la transmission d'actionneur (60) est autobloquante.

10. Actionneur de blocage (2) selon l'une des revendications précédentes,
**caractérisé en ce que**
la transmission d'actionneur (60) est couplée par un excentrique (65) avec le chariot (20) et le chariot (20) peut être déplacé selon l'axe (L) par une rotation de l'excentrique (65).

11. Actionneur de blocage (2) selon l'une des revendications précédentes,
**caractérisé en ce que**
il comporte au moins un capteur qui peut saisir la position du chariot (20), du verrou de blocage (40), de la transmission d'actionneur (60) et/ou de l'excentrique (65).

12. Actionneur de blocage (2) selon le préambule de la revendication 1 ou de l'une des revendications précédentes,
**caractérisé en ce qu'**il comprend
un mécanisme de blocage (80), et
le mécanisme de blocage (80) fixe le verrou de blocage (40) dans sa position de blocage par rapport au boîtier (10) selon l'axe (L).

13. Actionneur de blocage (2) selon la revendication 12,
**caractérisé en ce que**
le mécanisme de blocage (80) a une denture de verrou (72) dans laquelle peut pénétrer le verrou de blocage (40),
- le verrou de blocage (40) et la denture de verrou (72) ont des contredé-pouilles (59, 79) qui se correspondent, et qui peuvent pénétrer l'une dans l'autre pour bloquer le verrou de blocage (40) selon l'axe (L).

14. Procédé de gestion d'un actionneur de blocage (2), notamment d'un actionneur de blocage (2) selon l'une des revendications 12 ou 13, comprenant les étapes de procédé consistant à :
- déplacer le chariot (20) dans une première direction à partir de la position d'ouverture (O) dans une position de blocage (C),
- fixer le verrou de blocage (40) dans la position de blocage (C) du chariot (20) par le mécanisme de blocage (80) par rapport au boîtier (10),
- déplacer le chariot (20) hors de la position de blocage (C) dans la position d'ouverture (O) dans une seconde direction opposée à la première direction, selon l'axe (L) et générer ainsi une précontrainte de ressort sur le verrou de blocage (40) dans la seconde direction,
- libérer le verrou de blocage (40) par le mécanisme de verrouillage et déplacer le verrou de blocage (40) dans la seconde position avec le dispositif de ressort.

15. Transmission (1), notamment transmission de frein comprenant un actionneur de blocage (2) selon l'une des revendications 1 à 13, et une roue à cliquet tournant autour de l'axe de transmission (7).

16. Frein de service et/ou de parking notamment frein de service et/ou frein de parking d'un véhicule avec une transmission (1) selon la revendication 15.
